# EUROPÄISCHE PATENTSCHRIFT

(11) **EP 0 753 531 B1**
(45) Veröffentlichungstag und Bekanntmachung des Hinweises auf die Patenterteilung: **19.03.2003**
(21) Anmeldenummer: 96110595.4
(22) Anmeldetag: 01.07.1996
(51) Int. Cl.: C08G 18/67

(54) **Strahlenhärtbare, wässrige Dispersionen, deren Herstellung und Verwendung**
Radiation-curable aqueous dispersions, their preparation and use
Dispersions aqueuses durcissables par irradiation, leur préparation et utilisation

(30) Priorität: 13.07.1995 DE 19525489
(43) Veröffentlichungstag der Anmeldung: 15.01.1997
(73) Patentinhaber: WOLFF WALSRODE AG, 29655 Walsrode (DE)
(72) Erfinder: Dannhorn, Wolfgang, Dr., 29664 Walsrode (DE); Hecht, Reinhold, Dr., 29683 Fallingbostel (DE); Hoppe, Lutz, Dr., 29664 Walsrode (DE); Lühmann, Erhard, 29699 Bomlitz (DE)
(74) Vertreter: Pettrich, Klaus-Günter, Dr.

(56) Entgegenhaltungen:
- EP-A- 0 554 784
- EP-A- 0 584 734
- DE-A- 3 437 918

## Beschreibung

Die Herstellung von wäßrigen Polyurethan-Dispersionen ist Stand der Technik und wird beispielsweise in der EP-75 775, DE-OS 34 17 265, DE-OS-35 16 806, DE-OS-36 13 492, DE-OS-36 03 996, US-49 92 507, CA-12 24 586, "Methoden der Organischen Chemie", Houben-Weyl, 4.Auflage, Band E20/Teil 2, S.1662, Georg Thieme Verlag, Stuttgart, 1987 und in der "Angewandten Chemie", D. Dieterich, **82**, 53 (1970) beschrieben. Zu Polyurethan-Lacküberzügen mit sehr gutem Eigenschaftsniveau, wie Chemikalienbeständigkeit und mechanische Stabilität, gelangt man, wenn die Beschichtungen nach Verdunsten des Wassers noch bei höheren Temperaturen reagieren bzw. vernetzt werden. Diesen Vorgang bezeichnet man als Einbrennen. Beispielsweise vernetzen unter diesen Bedingungen ionisch modifizierte Urethanpräpolymere, die noch anteilig verkappte Isocyanatgruppen enthalten, mit sich selbst. Eine andere Methode besteht darin, daß man den Polyurethan-Dispersionen Aminoplast-Harze zusetzt, mit denen dann die Endvernetzung ebenfalls bei höheren Temperaturen erfolgt. Die Aushärtung bei höheren Temperaturen ist dann geeignet, wenn es sich um temperaturbeständige Substrate handelt. Nicht bzw. nur bedingt geeignet ist diese Methode zum Beschichten von Holz, Papier oder Leder.

Zum Schutz vor äußeren Einflüssen der zuletzt genannten Substrate eignen sich besonders Polyurethan-Dispersionen, die strahlenvernetzbar sind. In der EP-554 784 und in der DE-34 37 918 wird die Herstellung von strahlenhärtbaren Polyurethan-Dispersionen basierend auf Acryloyl- bzw. Methacryloylgruppen beschrieben. Nach Verdunsten des Wassers erhält man allerdings Überzüge, die vor der Strahlenhärtung noch nicht mechanisch belastbar sind bzw. klebrige Oberflächen ergeben.

Solche Bindemitteldispersionen können nicht oder nur bedingt zum Beschichten von Stühlen verwendet werden, da nach der Strahlenhärtung unter Praxisbedingungen bedingt durch Strahlenschattenbereiche keine komplette Aushärtung, besonders unterhalb der Sitzschale, erfolgt. Diese Bereiche bleiben klebrig, was nachteilig ist. Weiterhin ist die Reparaturfähigkeit der Beschichtungen, die mit solchen Dispersionen erhalten werden, sehr schlecht. Die Oberflächen kleben, lassen sich daher nicht schleifen. Nach der Aushärtung ist dann die Haftung der neuen Beschichtung, wie der Lackspezialist weiß, unzureichend.

Wünschenswert sind demnach Dispersionen, die nach Verdunsten des Wassers klebfreie, mechanisch beanspruchbare Oberflächen ergeben. Dadurch ist außerdem eine Reduzierung der Staubempfindlichkeit der noch nicht ausgehärteten Lackoberflächen gegeben.

Physikalisch antrocknende, strahlenhärtbare Polyurethanacrylat-Dispersionen werden in der EP-209 684 beschrieben. Allerdings reicht die mechanische Beanspruchbarkeit, wie beispielsweise die Schleifbarkeit, der mit diesen Dispersionen erhaltenen Oberflächen nach Verdunsten des Wassers nicht aus, um diese, vom Fachmann erwünschte Anforderung, zu erfüllen.

Aufgabe war es, wäßrige Polyurethan-Dispersionen zur Verfügung zu stellen, die nach Verdunsten des Wassers klebfreie, schleifbare Beschichtungen ergeben, die anschließend radikalisch und/oder strahlenchemisch zu kratzfesten und chemikalienbeständigen Überzügen härten und die die vorher genannten Nachteile nicht aufweisen.

Überraschenderweise ließ sich die Aufgabenstellung dadurch lösen, daß man hydroxylgruppenhaltige Präpolymere, im Gegensatz zu den in den vorhergenannten Patentschriften beschriebenen niedermolekularen Hydroxyalkyl(meth)acrylaten, zur Synthese der erfindungsgemäßen Polyurethan-Dispersionen einsetzt.

Der gefundene Syntheseweg ist aufgrund der Verwendung von Präpolymeren auch in ökonomischer Hinsicht vorteilhaft, weil durch den Einsatz der hydroxylgruppenhaltigen Präpolymeren bereits Moleküle mit höheren Molmassen zum Aufbau der Makromoleküle eingesetzt werden und sich dadurch der Isocyanatanteil gegenüber den herkömmlichen Herstellmethoden strahlenhärtbarer Polyurethandispersionen entscheidend reduziert. Wie bekannt, sind Isocyanate relativ teure Ausgangsverbindungen.

Gegenstand der Erfindung sind Polyurethan-Dispersionen auf Basis von hydroxylgruppenhaltigen Präpolymeren. Die Herstellung der erfindungsgemäßen Polyurethan-Dispersionen erfolgt durch Polyaddition von
A. 40 mindestens Gew.-%, vorzugsweise 50-80 Gew.-%, einem oder mehreren hydroxylgruppenhaltigen Präpolymeren ausgewählt aus den Gruppe mit einem OH-Gehalt von 40-120 mg KOH/g und Polyesteracrylatpräpolymer, Polyepoxacrylatpräpolymer oder Polyurethanacrylatpräpolymer.
B. 0,1-20 Gew.-%, vorzugsweise 2-15 Gew.-%, einer oder mehrerer monound/oder difunktioneller gegenüber Isocyanatgruppen reaktiven Verbindungen, die kationische, anionische und/oder durch Ethereinheiten dispergierend wirkende Gruppen enthalten mit
C. 10-50 Gew.-%, vorzugsweise 15-40 Gew.-%, einem oder mehreren Polyisocyanaten
   sowie anschließende Umsetzung mit
D. 0,1-10 Gew.-%, vorzugsweise 0,5-7 Gew.-%, einem oder mehreren Diund/oder Polyaminen.

Gegenstand der Erfindung ist außerdem die Verwendung der erfindungsgemäßen Polyurethan-Dispersionen als Lackbindemittel.

Gegebenenfalls können zusätzlich monofunktionelle Alkohole wie Ethanol, Butanol und difunktionelle Alkohole, wie Propylenglykol, Neopentylglykol, zum Präpolymeraufbau eingesetzt werden.

Bei den hydroxylgruppenhaltigen Präpolymeren A handelt es sich um Polykondensationsprodukte, die sich ableiten von Polycarbonsäuren bzw., falls zugänglich, deren Anhydride (exemplarisch seien genannt Adipinsäure, Sebacinsäure. Maleinsäureanhydrid, Fumarsäure und Phthalsäure),
di- und/oder höherfunktionellen Polyolen (wie z.B. Ethylenglykol, Propylenglykol, Neopentylglykol, Trimethylolpropan, Pentaerythrit, alkoxylierte Di- bzw. Polyole, usw.) und
Acryl- und/oder Methacrylsäure.

Nach der Polykondensation können überschüssige Carboxylgruppen mit Epoxiden umgesetzt sein.

Die Herstellung der hydroxylgruppenhaltigen Präpolymeren A ist in der US-PS-42 06 205, DE-OS-40 40 290, DE-OS-33 16 592, DE-OS-37 04 098 und "UV&EB Curing Formulations for Printing Inks Coatings and Paints", ed. R. Holman and P. Oldring, published by SITA Technology, London (England) 1988, S. 36 f beschrieben. Die Reaktionen sind dann zu beenden, wenn die OH-Zahl im Bereich von 40-120 mg KOH/g liegt.

Kationisch, anionisch und/oder durch Ethergruppen dispergierend wirkende Verbindungen B sind solche, die beispielsweise Sulfonium-, Ammonium-, Carboxylat-, Sulfonat- und/oder Polyethergruppen enthalten und durch das Vorhandensein von isocyanatreaktiven Gruppen in die Makromoleküle eingebaut werden. Bevorzugt geeignete isocyanatreaktive Gruppen sind Hydroxyl- und Amingruppen. Vertreter für Verbindungen B sind Bis(hydroxymethyl)-propionsäure, Äpfelsäure, Glykolsäure, Milchsäure, Glycin, Alanin, Taurin, 2-Aminoethylaminoethansulfonsäure, auf Alkoholen gestartete Polyethylenglykole und Polypropylenglykole. Besonders geeignet ist Bis(hydroxymethyl)-propionsäure und Polyethylenglykol 750 monomethylether.

Die Polyaddition kann mit aromatischen, araliphatischen, aliphatischen oder cycloaliphatischen Polyisocyanaten C erfolgen. Es können auch Mischungen solcher Polyisocyanate C eingesetzt werden. Beispiele geeigneter Polyisocyanate C sind Tetramethylendiisocyanat, Hexamethylendiisocyanat, 2,3,3-Trimethylhexa-methylendiisocyanat, 1,4-Cyclohexylendiisocyanat, Isophorondiisocyanat, 1,4-Phenylendiisocyanat, 2,6-Toluylendiisocyanat, 1,5-Naphthylendiisocyanat, 2,4- oder 4,4'-Diphenylmethan-diisocyanat, Triphenylmethan-4,4',4"-triisocyanat sowie Polyisocyanate, die durch Trimerisation oder Oligomerisation von Diisocyanaten oder durch Reaktion von Diisocyanaten mit polyfunktionellen hydroxyl- oder amingruppenhaltigen Verbindungen entstehen. Hierzu gehört das Isocyanurat des Hexamethylendiisocyanats. Weiterhin geeignet sind blockierte, reversibel verkappte Polykisisocyanate wie 1,3,5-Tris-[6-(1-methyl-propyliden-aminoxycarbonylamino)-hexyl]-2,4,6-trioxo-hexahydro-1,3,5-triazin. Besonders bevorzugt sind Hexamethylendiisocyanat und Isophorondiisocyanat und deren Mischungen.

Di- und/oder Polyamine D dienen zum Erhöhen der Molmasse. Da diese Reaktion im wäßrigen Medium stattfindet, müssen die Di- und/oder Polyamine D reaktiver als Wasser gegenüber den Isocyanatgruppen sein. Exemplarisch seien genannt Ethylendiamin, 1,6-Hexamethylendiamin, Isophorondiamin, 1,3-, 1,4-Phenylendiamin, 4,4'-Diphenylmethandiamin, aminofunktionelle Polyethylenoxide bzw. Polypropylenoxide (bekannt unter dem Namen Jeffamin®, D-Reihe), Triethylentetramin und Hydrazin. Besonders bevorzugt ist Ethylendiamin.

Anteilig können auch Monoamine, wie z.B. Butylamin, Ethylamin und Amine der Jeffamin® M-Reihe, aminofunktionelle Polyethylenoxide und Polypropylenoxide zugesetzt werden.

Zur Herstellung der erfindungsgemäßen Polyurethan-Dispersionen können sämtliche, dem Stand der Technik bekannte Verfahren wie Emulgator-Scherkraft-, Aceton-, Präpolymer-Misch-, Schmelz-Emulgier-, Ketimin- und Feststoff-Spontan-Dispergier-Verfahren bzw. Abkömmlinge davon verwendet werden (vergl. "Methoden der Organischen Chemie", Houben-Weyl, 4. Auflage, Band E20/Teil 2, S.1682, Georg Thieme Verlag, Stuttgart, 1987). Erfahrungsgemäß am besten geeignet ist das Aceton-Verfahren.

Die Komponenten A und B werden zur Herstellung der Vorprodukte im Reaktor vorgelegt, mit einem mit Wasser mischbaren aber gegenüber Isocyanatgruppen inerten Lösungsmittel verdünnt und auf höhere Temperaturen, insbesondere im Bereich von 50 bis 120°C, aufgeheizt. Geeignete Lösungsmittel sind Aceton, Butanon, Tetrahydrofuran, Dioxan, Acetonitril und 1-Methyl-2-pyrrolidon. Weiterhin können die zum Beschleunigen der Isocyanatadditionsreaktion bekannten Katalysatoren wie z.B. Triethylamin, 1,4-Diazabicyclo-[2,2,2]-oktan, Zinndioktoat oder Dibutylzinndilaurat mit vorgelegt werden. Zu diesen Mischungen tropft man das und/oder die Polyisocyanate C. Das Verhältnis der Mole aller Hydroxylgruppen zu Mole aller Isocyanatgruppen liegt in der Regel zwischen 0,3 und 0,95 insbesondere zwischen 0,4 und 0,9.

Nach der Herstellung der Polyurethan-Lösungen aus A, B und C erfolgt, falls dies noch nicht in den Ausgangsmolekülen durchgeführt wurde, die Salzbildung der anionisch und/oder kationisch dispergierend wirkenden Zentren der Verbindungen B. Im Falle anionischer Zentren sind dazu Basen wie Ammoniak, Triethylamin, Triethanolamin, Kaliumhydroxid oder Natriumcarbonat und im Falle kationischer Zentren Schwefelsäuredimethylester oder Bernsteinsäure vorteilhaft einsetzbar. Werden Verbindungen B mit Ethergruppen verwendet, entfällt der Neutralisationsschritt.

Im letzten Reaktionsschritt, bei dem im wäßrigen Medium eine Molmassenerhöhung und die Ausbildung der erfindungsgemäßen Polyurethan-Dispersionen stattfindet, werden die Polyurethan-Lösungen aus A, B und C unter starkem Rühren entweder in das Dispergierwasser, das das und/oder die Polyamine D enthält, eingetragen oder man rührt umgekehrt die Dispergierwasser/Polyamine D-Mischung zu den Polyurethan-Lösungen aus A, B und C. Es erfolgt dann die Molmassenerhöhung durch Reaktion von noch vorhandenen Isocyanatgruppen der Umsetzungsprodukte aus A, B und C mit den aminischen Wasserstoffen. Außerdem bilden sich die erfindungsgemäßen Dispersionen aus. Die eingesetzte Menge an Polyamin D hängt von den noch vorhandenen, nicht umgesetzten Isocyanatgruppen ab.

Falls erwünscht kann das Lösungsmittel abdestilliert werden. Die Dispersionen haben dann einen Festkörpergehalt von 20 - 60 Gew.-%, insbesondere 30-55 Gew.-%. Zusätzlich können zum Stabilisieren der Dispersionen externe Emulgatoren verwendet werden.

Die erfindungsgemäßen Polyurethan-Dispersionen ergeben nach Verdunsten des Wassers bereits ohne Zugabe von Hilfsstoffen physikalisch trockene Überzüge mit einer hohen mechanischen Beanspruchbarkeit. Insbesondere zeichnen sie sich durch ihre Schleifbarkeit aus. Durch anschließende strahlenchemisch und/oder radikalisch induzierte Vernetzung härten die Filme zu besonders hochwertigen, kratzfesten und chemikalienresistenten Lacküberzügen aus.

Bei der strahlenchemisch induzierten Polymerisation (UV-, Elektronen-, Röntgenoder Gamma-Strahlen) ist die UV-Härtung besonders bevorzugt. Die UV-Härtung wird in Gegenwart von Fotoinitiatoren ausgelöst. Als Fotoinitiatoren eignen sich z.B. aromatische Ketonverbindungen; wie Benzophenone, Alkylbenzophenone, Michlers Keton, Anthron und halogenierte Benzophenone. Weiter geeignet sind z.B. 2,4,6-Trimethyl-benzoyl-diphenylphosphinoxid, Phenylglyoxylsäureester, Anthrachinon und seine Derivate, Benzilketale und Hydroxyalkylphenone. Es können auch Gemische dieser Verbindungen eingesetzt werden.

Erfolgt die Härtung radikalisch, eignen sich wasserlösliche Peroxide oder wäßrige Emulsionen nicht wasserlöslicher Initiatoren. Diese Radikalbildner können in bekannter Weise mit Beschleunigern kombiniert werden.

Die erfindungsgemäßen Polyurethan-Dispersionen lassen sich durch Spritzen, Walzen, Rakeln, Gießen, Streichen oder Tauchen auf unterschiedlichste Substrate applizieren. Werden die erfindungsgemäßen Polyurethan-Dispersionen auf Holz appliziert, erhält man Oberflächen, die sich durch eine besonders anspruchsvolle Oberflächenoptik auszeichnen. Weiterhin können andere saugfähige Substrate wie Papier, Karton, Leder u.a. aber auch Metalle und Kunststoffe damit beschichtet werden.

Man kann die erfindungsgemäßen Polyurethan-Dispersionen als alleiniges Lackbindemittel einsetzen oder mit den in der Lacktechnologie bekannten Bindemitteln, Hilfsstoffen und Additiven, wie beispielsweise Dispersionen, Pigmente, Farbstoffe oder Mattierungsmittel versetzen bzw. kombinieren.

### Beispiele

Die folgenden Beispiele sollen die Erfindung erläutern, ohne sie zu beschränken.

Die eingesetzten Polyesteracrylatpräpolymeren A werden wie folgt hergestellt bzw. eingesetzt.

### Herstellung des hydroxylgruppenhaltigen Polyesteracrylatpräpolymeren A1 gemäß Beispiel 2 der DE-OS 40 40 290

193 g Phthalsäureanhydrid, 190 g Adipinsäure, 62 g Ethylenglykol und 37 g Toluol setzt man 1 Stunde bei 175°C in einem Mehrhalskolben mit Wasserabscheider um. Anschließend fügt man bei 100°C 220 g 1,6-Hexandiol, 268 g Trimethylolpropan, 375 g Acrylsäure, 483 g Toluol, 10,4 g p-Toluolsulfonsäuremonohydrat und 5,2 g Hydrochinon zu und rührt 8 Stunden unter Rückflußkochen. Im Wasserstrahlvakuum wird das Lösungsmittel abdestilliert. Zu 500 g des erhaltenen Rückstandes gibt man 48,3 g Epikote 828 (Epoxidharz der Fa. Shell) und 1,5 g Triphenylphosphin und rührt 5 Stunden bei 120°C. Die OH-Zahl beträgt 81 mg KOH/g und die Viskosität 19,8 Pa.s

### Hydroxylgruppenhaltiges Polyesteracrylatpräpolymer A2

Laromer LR 8800 (eingetragener Markenname der Fa. BASF) OH-Zahl 80 mg KOH/g
Viskosität 9,7 Pa.s

### Hydroxylgruppenhaltiges Polyesteracrylatpräpolymer A3

Laromer LR 8799 (eingetragener Markenname der Fa. BASF) OH-Zahl 82 mg KOH/g
Viskosität 4,1 Pa.s

### Herstellung der erfindungsgemäßen Polyesteracrylaturethan-Dispersionen

### Beispiel 1

Zu 150 g Polyesteracrylatpräpolymer A1, 15 g Bis-(hydroxymethyl)-propionsäure, 0,22 g Dibutylzinndilaurat und 129 g Aceton wird unter Rückflußerhitzen eine Mischung aus 24 g Hexamethylendiisocyanat und 31,7 g Isophorondiisocyanat zugegeben und 4 Stunden gerührt. Anschließend setzt man bei 40°C 11,2 g Triethylamin zu. Nach Abkühlen auf Raumtemperatur wird die Polyesteracrylaturethan-Lösung unter starkem Rühren in 515 g Wasser, das 3,6 g Ethylendiamin enthält, gegeben. Dabei bildet sich spontan eine Dispersion aus. Es wird so lange gerührt, bis IR-spektroskopisch kein Isocyanat bei 2270 Wellenzahlen mehr nachweisbar ist. Das Lösungsmittel wird mit einem Rotationsverdampfer unter Vakuum abgezogen. Feststoffgehalt: 39,1%; pH: 7,1; Viskosität DIN 4 (20°C): 89 sek; MFT:< 12°C.

### Beispiel 2

Wiederholung von Beispiel 1 mit der Änderung, daß 150 g Polyesteracrylatpräpolymer A2 zur Herstellung der Polyesteracrylaturethan-Lösung eingesetzt werden. Anschließend setzt man bei 40°C 11,2 g Triethylamin zu. Nach Abkühlen auf Raumtemperatur wird in die Polyesteracrylaturethan-Lösung unter starkem Scheren eine Mischung aus 515 g Wasser und 3,6 g Ethylendiamin eingerührt, wobei sich spontan eine Dispersion ausbildet. Nach vollständiger Umsetzung der Isocyanatgruppen wird das Lösungsmittel im Vakuum abdestilliert.
Feststoffgehalt: 41,1 %; pH: 7,2; Viskosität DIN 4 (20°C): 27 sek; MFT: < 12°C.

### Beispiel 3

Wiederholung von Beispiel 1 mit der Änderung, daß 150 g Polyesteracrylatpräpolymer A3 zur Herstellung des Polyesteracrylaturethan-Lösung eingesetzt werden. Anschließend neutralisiert man bei 40°C mit 11,2 g Triethylamin. Bei Raumtemperatur wird in die Polyesteracrylaturethan-Lösung unter starkem Scheren eine Mischung aus 515 g Wasser und 3,6 g Ethylendiamin eingerührt, es bildet sich spontan eine Dispersion aus. Nach vollständiger Umsetzung der Isocyanatgruppen wird das Lösungsmittel im Vakuum abdestilliert.
Feststoffgehalt: 40,2 %; pH: 7,2; Viskosität DIN 4 (20°C): 27 sek; MFT: < 12°C.

### Beispiel 4

Zu einer Mischung aus 150 g Polyesteracrylatpräpolymer A3, 7,5 g Bis-(hydroxymethyl)-propionsäure, 0,2 g Dibutylzinndilaurat und 118 g Aceton, die rückflußsiedet, tropft man 50 g Isophorondiisocyanat und rührt 4 Stunden. Anschließend wird bei 40°C 5,6 g Triethylamin zugegeben. Nach Abkühlen auf Raumtemperatur wird die Polyesteracrylaturethan-Lösung -Lösung unter starkem Rühren in 470 g Wasser, das 3,6 g Ethylendiamin enthält, gegeben. Dabei bildet sich spontan eine Dispersion aus. Es wird so lange gerührt, bis IR-spektroskopisch kein Isocyanat bei 2270 Wellenzahlen mehr nachweisbar ist. Das Lösungsmittel wird mit einem Rotationsverdampfer unter Vakuum abgezogen.
Feststoffgehalt: 37,4 %; pH: 7,1; Viskosität DIN 4: 73 sek; MFT: <12°C.

### Beispiel 5

Zu 100 g Polyesteracrylatpräpolymer A 3, 3 g Bis-(hydroxymethyl)-propionsäure, 60 g Polyethylenglykol 750 monomethylether, 0,2 g Dibutylzinndilaurat und 96 g Aceton tropft man unter Rückflußkochen 90 g IPDI und rührt 4 h. Nach Abkühlen wird 2,26 g Triethylamin zugegeben. Anschließend dispergiert man die Polyesterurethan-Lösung unter starkem Rühren in 315 g Wasser, das 2,4 g Ethylendiamin enthält. Es wird so lange gerührt bis die Dispersion isocyanatfrei ist. Das Lösungsmittel wird unter Vakuum mit einem Rotationsverdampfer abgezogen. Die erhaltene Dispersion ist auch bei einem pH-Wert von 1 stabil. Feststoffgehalt: 40 %, pH: 7,1, Viskosität DIN 4: 17 s, MFT: >12°C.

### Anwendungstechnische Prüfung der erfindungsgemäßen Polyesteracrylaturethan-Dispersionen (siehe auch Tabelle)

Die Dispersionen wurden in einer Schichtdicke von 90 µm auf Glasplatten aufgetragen, bei 25°C getrocknet und nach 1 Stunde die Pendelhärten nach König (DIN 53 157) bestimmt. In gleicher Weise wurden die Dispersionen, welchen jeweils 1,5 Gew.-% des Fotoinitiators 2-Hydroxy-2-methyl-1-phenyl-1-propanon (Darocur 1173 Fa. Ciba Geigy) zugesetzt waren, auf Glas aufgetragen, getrocknet (25°C) und mit UV-Licht bestrahlt (80 W/cm, 10 m/min und Lampe). 30 Minuten nach der UV-Härtung wurden die Pendelhärten nach König (DIN 53 157) bestimmt.

Zur Bestimmung der Oberflächenoptik wurden jeweils 154 g Dispersion mit 2 g Mattierungsmittel TS 100 (Fa. Degussa), 2,6 g Fotoinitiatormischung (2-Hydroxy-2-methyl-1-phenyl-1-propanon (Darocur 1173 Fa. Ciba Geigy)/Benzophenon 2:1) und 1,5 g Schwego PUR 8050 VP (Fa. Schwegmann) vermischt. Die Rezeptierungen wurden mit Wasser auf eine Auslaufzeit von 35-40 sek DIN 4-Becher eingestellt und ca. 80 g/m² auf Esche gespritzt. Nach Verdunsten des Wassers bei 25°C wurde mit UV-Licht (80 W/cm, 1 m/min und Lampe) gehärtet und die Oberflächen geschliffen. Auf diesen Oberflächen wurden nochmals die selben Formulierungen (Schichtdicke: ca. 80 g/m²) gespritzt, bei 25°C getrocknet und mit UV-Licht (80 W/cm, 1 m/min und Lampe) gehärtet. Das Verhalten auf der Holzoberfläche (Fülle), die Porenbenetzung und der Verlauf sind in der Tabelle zusammengestellt. Außerdem wurden mit diesen Oberflächen die Oberflächenbeständigkeit nach DIN 68 861 - 1B (die Tabelle enthält die Prüfergebnisse für Wasser, 48%iges Ethanol, 10%iges Ammoniakwasser, Dibutylphthalat und Aceton) geprüft.

### Beispiel 6

Zu 150 g Polyesteracrylat A 3, 7,6 g Bis-(hydroxymethyl)-propionsäure, 1,4 g Neopentylglykol, 0,2 g Dibutylzinndilaurat und 53 g Aceton gibt man eine Mischung aus 36 g Isophorondiisocyanat und 15 g Hexamethylendiisocyanat. Die Lösung wird 5 Stunden unter Rühren rückflußgekocht. Nach Abkühlen werden 5,7 g Triethylamin zugegeben. Anschließend dispergiert man die Polyesterurethan-Lösung unter starkem Rühren in 416 g Wasser, das 5,1 g Ethylendiamin enthält. Es wird solange gerührt, bis IR-spektroskopisch keine Isocyanatbande bei einer Wellenlänge von 2.270 cm-¹ mehr nachweisbar ist. Das Lösungsmittel wird unter Vakuum abgezogen.
Feststoffgehalt: 40,1 %; pH: 7,9; Viskosität DIN-4:15 s, MFT:<12°C.

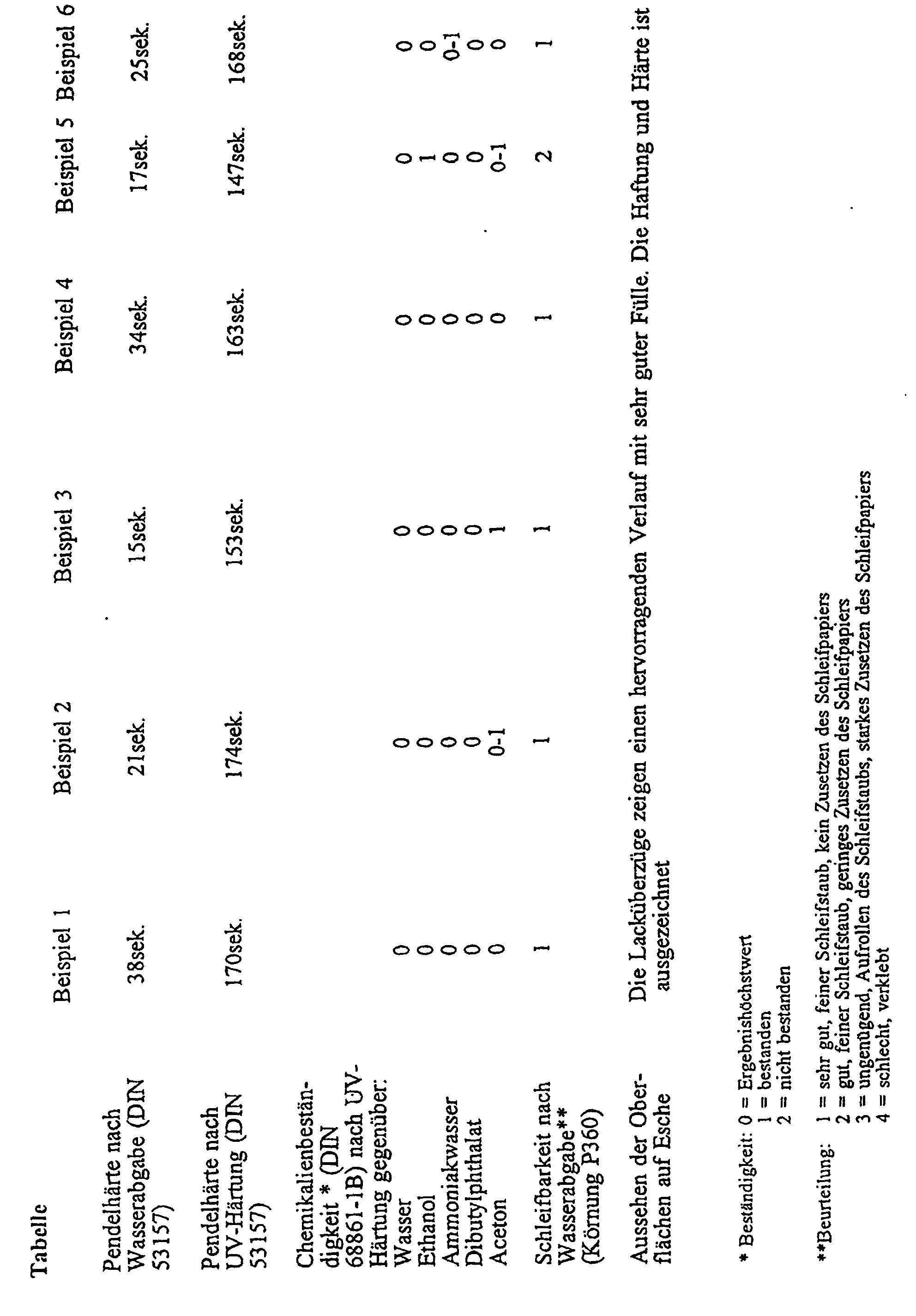

## Patentansprüche

1. Polyurethan-Dispersionen auf Basis von hydroxylgruppenhaltigen Präpolymeren, erhältlich durch Polyaddition von
A. mindestens 40 Gew.-%, einem oder mehreren hydroxylgruppenhaltigen Präpolymeren ausgewählt aus der Gruppe Polyesteracrylatpräpolymer, Polyepoxyacrylatpräpolymer oder Polyurethanacrylatpräpolymer mit einem OH-Gehalt von 40-120 mg KOH/g und
B. 0,1-20 Gew.-%, einer oder mehrerer mono- und/oder difunktioneller gegenüber Isocyanatgruppen reaktiven Verbindungen, die kationische, anionische und/oder durch Ethereinheiten dispergierend wirkende Gruppen enthalten mit
C. 10-50 Gew.-%, einem oder mehreren Polyisocyanaten
sowie anschließende Umsetzung mit
D. 0,1-10 Gew.-%, einem oder mehreren Di- und/oder Polyaminen.

2. Dispersionen gemäß Anspruch 1, **dadurch gekennzeichnet, dass**
A 50 bis 80 Gew.-%,
B 2 bis 15 Gew.-%,
C 15 bis 40 Gew.-% und
D 0,5 bis 7 Gew.-% beträgt.

3. Verwendung der Dispersionen gemäß einem der Ansprüche 1 oder 2 als Lackbindemittel.

## Claims

1. Polyurethane dispersions based on prepolymers containing hydroxyl groups, obtainable by polyaddition of
A. at least 40 wt.% of one or more prepolymers containing hydroxyl groups selected from the group of polyester acrylate prepolymer, polyepoxy acrylate prepolymer or polyurethane acrylate prepolymer with an OH content of 40-120 mg of KOH/g and
B. 0.1-20 wt.% of one or more mono- and/or difunctional compounds reactive towards isocyanate groups, which compounds contain groups which are cationic, anionic and/or have a dispersant action due to ether groups with
C. 10-50 wt.% of one or more polyisocyanates
together with a subsequent reaction with
D. 0.1-10 wt.% of one or more di- and/or polyamines.

2. Dispersions according to claim 1, **characterised in that**
A amounts to 50 to 80 wt.%,
B amounts to 2 to 15 wt.%,
C amounts to 15 to 40 wt.% and
D amounts to 0.5 to 7 wt.%.

3. Use of the dispersions according to one of claims 1 or 2 as coating binders.

## Revendications

1. Dispersions de polyuréthanne à base de prépolymères contenant des radicaux hydroxyle, obtenus par polyaddition de :
A. au moins 40% en poids d'un ou plusieurs prépolymères contenant des radicaux hydroxyle, choisis parmi le groupe constitué des prépolymères polyester-acrylate, des prépolymères polyépoxy-acrylate ou des prépolymères polyuréthanne-acrylate avec une teneur en OH allant de 40 à 120 mg KOH/g, et
B. 0,1 à 20% en poids d'un ou de plusieurs composés mono- et/ou difonctionnels, réagissant avec les radicaux isocyanate, qui contiennent des radicaux cationiques, anioniques et/ou agissant par dispersion par des unités éther, avec
C. 10 à 50% en poids d'un ou de plusieurs polyisocyanates,
ainsi que ensuite, réaction avec :
D. 0,1 à 10% en poids d'une ou de plusieurs di- ou polyamines.

2. Dispersions suivant la revendication 1, **caractérisée en ce que** :
A s'élève à 50 à 80% en poids
B, à 2 à 15% en poids
C, à 15 à 40% en poids
D, à 0,5 à 7% en poids.

3. Utilisation des dispersions suivant l'une quelconque des revendications 1 ou 2 comme liant de vernis, laques et peintures.
